# NEW EUROPEAN PATENT SPECIFICATION

(11) **EP 0 630 938 B2**
(45) Date of publication and mention of the opposition decision: **19.08.2009**
(45) Mention of the grant of the patent: 01.09.1999
(21) Application number: 94304195.4
(22) Date of filing: 10.06.1994
(51) Int. Cl.: C08K 5/521, C08L 71/12

(54) **A flame resistant resin composition**
Flammhemmende Harzzusammensetzung
Composition de résine ignifuge

(30) Priority: 25.06.1993 JP 17754193
(43) Date of publication of application: 28.12.1994
(73) Proprietor: GE PLASTICS JAPAN LIMITED, Chuo-Ku, Tokyo (JP)
(72) Inventor: Kabaya, Hidekazu, Moka City, Tochigi Prefecture (JP); Ishida, Hiromi, Moka City, Tochigi Prefecture (JP); Ohtomo, Takashi, Utsunomiya City, Tochigi Prefecture (JP); Kubo, Hiroshi, Moka City, Tochigi Prefecture (JP)
(74) Representative: Bublak, Wolfgang

(56) References cited:
- EP-A- 0 521 628
- GB-A- 2 043 083

## Description

The present invention concerns a flame-retardant resin composition. In particular, the present invention concerns a flame-retardant resin composition containing a polyphenylene ether resin.

It is conventional knowledge that organophosphorus compounds such as triphenyl phosphate, cresyl phenyl phosphate, tricresyl phosphate, and isopropyl phenyl phosphate can be blended into polyphenylene ether resins (designated "PPEs" hereinafter) or resin compositions containing this material and polystyrene resin in order to impart flame-retardance thereto. However, such resins have the drawback that the organophosphorus compound exudes (bleeds) to the surface of the molded product during molding.

It is known that when an aromatic polyphosphate compound is used as the phosphorus compound in order to overcome this problem, the bleeding and the amount of gas emitted during molding can be reduced from the levels occurring when the aforementioned organophosphorus compounds are blended in (Japanese Kokai Patent Application Nos. Sho 55[1980]-118957 and Hei 1[1989]-17503). However, notwithstanding that the bleeding on the surface of the molded product and the amount of gases given off are reduced, these methods have the drawback that the surface of the molded product loses uniformity and has discolored portions.

The objective of the present invention is to provide a flame-retardant resin composition that makes it possible to obtain a molded product whose surface is uniform, suffers no discoloration, and does not bleed, and which does not give off gas during molding.

The inventors performed an investigation into the cause of the aforementioned drawbacks of nonuniformity and discolored portions experienced by the surface of the molded product. As a result, they discovered that these drawbacks were due to the magnesium present in the aromatic polyphosphate compound blended in to impart flame retardance, and found that said drawbacks could be solved by keeping the magnesium content at 50 ppm by weight or less. They thus arrived at the present invention.

Specifically, the present invention is a resin composition containing (A) 100 parts by weight polyphenylene ether resin or sum of polyphenylene ether resin and vinyl aromatic hydrocarbon resin, and (B) 0.1-40 parts by weight of tetraphenyl resorcine bisphosphate containing 2 to 50 ppm by weight of magnesium as impurity.

In addition, the drawbacks of nonuniformity and the occurrence of discolored portions experienced by the surface of the molded product are particularly evident in blow molding. When the aforementioned resin composition is employed in blow molding, the effect of the present invention can be achieved effectively.

The aforementioned organophosphorus compound can be prepared with the use of known synthetic methods. Tetraphenyl resorcin bisphosphate can be synthesized from resorcin.

The organophosphorus comprising component (B) contains magnesium as an impurity in the amount of 2 to 50 ppm by weight. It is undesirable that said content exceed 50 ppm by weight, as the surface of the molded product then experiences a loss of uniformity and the occurrence of discolored portions.

The organophosphorus comprising component (B) is used in the amount of 0.1-40 parts by weight, preferably 1-30 parts by weight, and yet more preferably 3-15 parts by weight, as against 100 parts by weight polyphenylene ether resin or the sum of this material and a vinyl aromatic hydrocarbon resin. When said amount compounded is less than 0.1 part by weight, flame retardance cannot be imparted. It is undesirable that said amount compounded exceed 40 parts by weight, as the mechanical properties are then degraded. Said amount compounded depends on whether or not other flame retardants are used concurrently as described below, and on their amounts.

The polyphenylene ether resin (PPE) comprising component (A) employed in the present invention can be a known PPE. "Polyphenylene ether resin" is a general term for a monomer expressed by the formula: 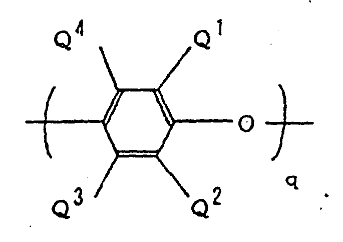 where Q¹, Q², Q³ and Q⁴ each independently express hydrogen atoms, halogen atoms, alkyl groups, alkoxy groups, and monovalent substituent groups selected from among species containing no tertiary α-carbon in haloalkyl or haloalkoxy groups possessing at least two carbon atoms between the halogen atom and the phenyl ring, and q is an integer expressing the degree of polymerization . Said PPE can be a homopolymer expressed by the aforementioned general formula, and can also be a copolymer consisting of a combination of two or types.

There are no special restrictions on the method for manufacturing the PPE. For example, it can be manufactured by the reaction of a phenol carried out according to a procedure such as those recorded in the specifications of U.S. Patents Nos. 3,306,874, 3,257,357 and 3,257,358. These phenols include 2,6-dimethylphenol, 2,6-dibutylphenol, 2,6-dibutylphenol, 2,6-dilaurylphenol, 2,6-dipropylphenol, 2,6-diphenylphenol, 2-methyl-6-ethylphenol, 2-methyl-6-cyclohexylphenol, 2-methyl-6-tolylphenol, 2-methyl-6-methoxyphenol, 2-methyl-6-butylphenol, 2,6-dimethoxyphenol, 2,3,6-trimethylphenol, 2,3,5,6-tetramethylphenol, and 2,6-diethoxyphenol, but are not limited to these materials. Each of these can be reacted alone and used in the form of the corresponding homopolymer, or can be reacted with another phenol and used in the form of the corresponding copolymer possessing differing units included in the aforementioned formula.

In a specific preferable example, Q¹ and Q² are C₁₋₄ alkyl groups, and Q³ and Q⁴ are hydrogen atoms or C₁₋₄ alkyl groups. Examples include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene)ether, poly(2,6-dipropyl-1,4-phenylene)ether, and poly(2-ethyl-6-propyl-1,4-phenylene) ether. Examples of PPE copolymers include copolymers containing a portion of an alkyl trisubstituted phenol, such as 2,3,6-trimethylphenol, in the aforementioned phenylene ether repeating units. These materials can be copolymers obtained by grafting styrene compounds onto the aforementioned PPEs. Examples of polyphenylene ethers onto which styrene compounds are grafted included copolymers obtained by graft polymerizing styrene compounds such as styrene, α-methylstyrene, vinyltoluene, and chlorostyrene onto the aforementioned PPEs.

The vinyl aromatic hydrocarbon resin that is freely employed in the present invention is itself a known material, and must contain in the polymer 25 wt% or more of repeating structural units derived from a vinyl aromatic compound expressed by the general formula 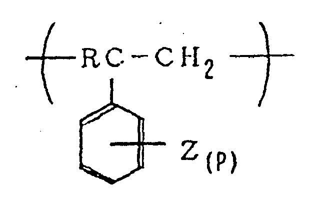 where R represents a hydrogen atom or a substituent group consisting of a C₁₋₄ alkyl group, Z represents a halogen or a substituent group consisting of a C₁₋₄ alkyl group, and p is an integer from 0 to 5 .

Examples of the aforementioned vinyl aromatic hydrocarbon resin include homopolymers of styrene or its derivatives; styrene polymers modified by the mixing or interaction of natural or synthetic elastomer materials such as polybutadiene, polyisoprene, butyl rubber, EPDM rubber, ethylene-propylene copolymer, natural rubber, polysulfide rubber, polyurethane rubber, and epichlorohydrin; and styrene-containing copolymers such as styrene-acrylonitrile copolymer (SAN), styrene-butadiene copolymer, styrene-maleic anhydride copolymer, styrene-acrylonitrile-butadiene polymer (ABS), poly-α-methylstyrene, and copolymers of ethylvinylbenzene and divinylbenzene. Moreover, the resin that is desirable for the purposes of the present invention is a polystyrene homopolymer or a rubber-modified polystyrene obtained by mixing or grafting with 3-30 wt%, and preferably 4-12 wt%, polybutadiene rubber or EPDM rubber.

While there is no special limitation on the mixing ratio of the styrene polymer with respect to the polyphenylene ether resin, the ratio should be in a range that does not compromise the superior characteristics of the polyphenylene ether resin, and is preferably a ratio of 5-100 parts by weight polyphenylene ether resin to 95-0 parts by weight styrene monomer.

In addition to the organophosphorus compound comprising component (B), known flame retardants, and especially known phosphorus flame retardants, that are compatible with said organophosphorus compound comprising component (B) can be blended into the composition of the present invention. If a known flame retardant is thusly blended in, it will be possible to reduce the amount of the organophosphorus compound in correspondence with this blending. Examples of the known flame retardants include triphenyl phosphate, cresyl phenyl phosphate, tricresyl phosphate, and isopropyl phenyl phosphate. These materials are normally used in amounts of less than 40 parts by weight, and preferably 30 parts by weight, and moreover are used so that the sum with the organophosphorus compound comprising component (B) is preferably 40 parts by weight or less, and yet more preferably 30 parts by weight or less. The weight ratio between the organophosphorus compound comprising component (B) and the content of other flame retardants is adjusted such that there are preferably 10 or fewer parts by weight of other flame retardants, and yet more preferably 4 or fewer, as against 1 part by weight of organophosphorus compound.

In addition to the aforementioned components, the composition of the present invention can contain various kinds of other commonly used materials such as additives and fillers. Depending on the situation, elastomers can be especially useful additives. The elastomers referred to herein fall under the general meaning of the term "elastomer." For example, it is possible to cite the definition given on pp. 71-78 of A.V. Tobolsky, Properties and Structures of Polymers (John Wiley & Sons, 1960), where "elastomer" signifies a polymer having a Young's modulus of 10⁵ to 10⁹ dynes/cm² (0.1-1020 kg/cm²) at ambient temperature. Specific examples of the elastomer include A-B-A' type elastomeric block copolymers, A-B-A' type elastomeric block copolymers in which the double bond of the polybutadiene component is hydrogenated, copolymers of polybutadiene, polyisoprene, and diene compounds with vinyl compounds, radial terblock [sic] copolymers, nitrile rubber, ethylene-propylene copolymer, ethylene-propylene-diene copolymer (EPDM), graft copolymers of Thiokol rubber, polysulfide rubber, acrylic rubber, polyurethane rubber, and butyl rubber with polyethylene, polyester elastomer, polyamide elastomer and polyurethane elastomer. In particular, A-B-A' type elastomeric block copolymer is preferable. The terminal blocks A and A' of this block copolymer are polymerized vinyl aromatic hydrocarbon blocks. B is a polymerized conjugated diene block or a conjugated diene block in which the greater part of the double bond is hydrogenated, and the molecular weight of the B block is greater than the combined molecular weights of the A and A' blocks. The terminal blocks A and A' can be alike or different, and said blocks are thermoplastic homopolymers or copolymers derived from vinyl aromatic hydrocarbons in which the aromatic component can be either monocyclic or polycyclic. Examples of these vinyl aromatic hydrocarbons include styrene, α-methylstyrene, vinyltoluene, vinylxylene, ethylvinylxylene, vinylnaphthalene and mixtures thereof. The central block B is an elastomeric polymer derived from a conjugated diene hydrocarbon, e.g., 1,3-butadiene, 2,3-dimethylbutadiene, isoprene, 1,3-pentadiene and mixtures thereof. The molecular weight of the respective terminal blocks A and A' is preferably in the range of approximately 2,000 to approximately 100,000, whereas the molecular weight of the central block B is preferably in the range of approximately 25,000 to approximately 1,000,000.

Besides the elastomers, other components such as various additives and fillers can be blended into the resin composition of the present invention as the objectives demand. For example, stabilizers such as sterically hindered phenols, organic phosphites, phosphonites, phosphonic acids, cyclic phosphonites, hydrazine derivatives, amine derivatives, carbamite derivatives, thioethers, phosphoric triamides, benzooxazole derivatives, and metal sulfides; UV absorbents such as benzotriazole derivatives, benzophenone derivatives, salicylate derivatives, sterically hindered amines, and oxalic acid amide derivatives; lubricants such as olefin waxes, metal salts of fatty acids, and fatty acid amides; brominated flame retardants such as decabromobiphenyl, pentabromotoluene, and decabromobiphenyl ether; pigments such as titanium oxide, zinc oxide, and carbon black; inorganic fillers such as glass beads, asbestos, glass fiber, wollastonite, mica, talc, clay, calcium carbonate, and silica; metal flakes such as flakes of copper, nickel, aluminum, and zinc; metal fibers such as aluminum fiber, aluminum alloy fiber, brass fiber, and stainless steel fiber; and organic fillers such as carbon fiber and aromatic polyamide fiber. The amount of these additives that is added varies depending on the type of compound that is used and the purpose of the addition.

In manufacturing the polyphenylene ether resin composition of the present invention, the various components can be mixed by a conventionally known method. For example, a method is suitably selected in which each component is dispersed and mixed with a high speed mixer such as a tumbler mixer or a Henschell mixer, after which they are melted and kneaded with extruders, Banbury mixers, and rolls and the like.

The present invention will be explained in greater detail below by means of application examples and comparative examples. However, the present invention is not restricted to these examples.

### Application examples

The following compounds were used in the application examples and comparative examples below.

### Component (A): polyphenylene ether resin (PPE)

Poly(2,6-dimethyl-1,4-phenylene) ether with an intrinsic viscosity [ή] (in chloroform at 30°C) of 0.48 dL/g Vinyl aromatic hydrocarbon resin: rubber-modified polystyrene resin (HIPS) (brand name: Diarex HT644-NAT, product of Mitsubishi Kasei Kogyo)

### Component B: organophosphorus compounds

Material (a) tetraphenyl resorcine bisphosphate with a magnesium content of 2 ppm by weight
Material (b) tetraphenyl resorcine bisphosphate with a magnesium content of 11 ppm by weight

### Comparative components

Material (c) tetraphenyl resorcin bisphosphate with a magnesium content of 110 ppm by weight
Material (d) triphenyl phosphate

### Application Examples 1 and 2 and Comparative Examples 1 and 2

Using a 30 mm diameter two-screw extruder, various components in the amounts (parts by weight) shown in Table I were kneaded and extruded at a barrel temperature set at 280°C and a frequency of rotation of 300 rpm to prepare pellets. Molded products (1300 mm x 260 mm x 30 mm, wall thickness of 3 mm) were molded from the created pellets using a blow molder that had been set to 220°C and had a die outlet diameter of 350 mm. These molded products were then subjected to an evaluation test.

Results of evaluating the aforementioned molded products are shown in Table I. The various characteristics shown in Table I were evaluated in the following manner.

### Surface discoloration of the molded product

The surfaces of the molded products were observed visually.
O: Surface uniform, no discoloration
X: Surface nonuniform, discoloration observed

### Bleeding of the molded product

The surfaces of the molded products were visually observed.
O: No bleeding present
X: Bleeding present

Release of gas during molding
O: Virtually no release of gas present
X: Release of gas present

**Table 1**

| Example | (A) PPE | HIPS | (B) Organo Phosphorus Compounds | Surface Discolouration of Molded Product | Bleeding of Molded Product | Release of gas during Molding |
|---|---|---|---|---|---|---|
| | | | | | | |
| 1 | 45 | 55 | (a) 10 | 0 | 0 | 0 |
| | | | | | | |
| 2 | 45 | 55 | (b) 10 | 0 | 0 | 0 |
| | | | | | | |

| Comparative Example | | | | | | |
|---|---|---|---|---|---|---|
| 1 | 45 | 55 | (c) 10 | X | 0 | 0 |
| | | | | | | |
| 2 | 45 | 55 | (d) 10 | 0 | X | X |
| | | | | | | |

When an organophosphorus compound with a magnesium content of 50 ppm by weight or less is used in the aforementioned manner, it is possible to prevent the molded product from undergoing surface discoloration, bleeding, and the release of gas during molding.

### Merits of the invention

The flame-retardant resin composition of the present invention provides a molded product whose surface does not undergo discoloration or bleeding, and which does not release gas during molding.

## Claims

1. A resin composition containing (A) 100 parts by weight of a polyphenylene ether resin or a polyphenylene ether resin and a vinyl aromatic hydrocarbon resin; and (B) 0.1 to 40 parts by weight of tetraphenyl resorcine bisphosphate containing 2 to 50 ppm by weight of magnesium as impurity.

2. A blow molding resin composition according to claim 1.

## Patentansprüche

1. Eine Harzzusammensetzung enthaltend (A) 100 Gewichtsteile eines Polyphenylenetherharzes oder eines Polyphenylenetherharzes und eines vinylaromatischen Kohlenwasserstoffharzes; und (B) 0,1 bis 40 Gewichtsteile Tetraphenylresorcinbisphosphat enthaltend 2 bis 50 Gewichts-ppm Magnesium als Verunreinigung.

2. Harzzusammensetzung zum Blasformen gemäß Anspruch 1.

## Revendications

1. Composition à base de résine, contenant (A) 100 parties en poids d'une résine de poly(oxyde de phénylène) ou d'une résine de poly(oxyde de phénylène) et d'une résine d'hydrocarbure aromatique vinylique, et (B) 0,1 à 40 parties en poids de tétraphénylrésorcinebisphosphate contenant 2 à 50 ppm en poids de magnésium comme impureté.

2. Composition à base de résine selon la revendication 1 pour le moulage par soufflage.
